# EUROPEAN PATENT SPECIFICATION

(11) **EP 2 631 093 B1**
(45) Date of publication and mention of the grant of the patent: **31.10.2018**
(21) Application number: 11833807.8
(22) Date of filing: 28.09.2011
(51) Int. Cl.: B60C 23/02, B60C 23/04, B60C 23/00, G08C 17/02

(54) **METHOD FOR RECEIVING AND PROCESSING TIRE PRESSURE SIGNAL AND DEVICE THEREFOR**
VERFAHREN ZUM EMPFANGEN UND VERARBEITEN EINES REIFENDRUCKSIGNALS UND VORRICHTUNG DAFÜR
PROCÉDÉ DE RÉCEPTION ET DE TRAITEMENT DE SIGNAL DE PRESSION DE GONFLAGE DE PNEU ET DISPOSITIF ASSOCIÉ

(30) Priority: 22.10.2010 CN 201010516067
(43) Date of publication of application: 28.08.2013
(73) Proprietor: Shanghai Baolong Automotive Corporation, Shanghai 201619 (CN)
(72) Inventor: LI, Wei, Shanghai 201619 (CN); XU, Changwu, Shanghai 201619 (CN); HAN, Wenbin, Shanghai 201619 (CN)
(74) Representative: D Young & Co LLP
(86) International application number: PCT/CN2011/080253
(87) International publication number: WO 2012/051901

(56) References cited:
- EP-A2- 1 215 056
- EP-A2- 1 440 824
- CN-A- 1 521 027
- CN-A- 1 527 949
- CN-A- 101 234 583
- DE-A1- 10 342 297
- JP-A- 2005 263 021
- US-A1- 2009 224 902
- US-A1- 2009 224 902

## Description

### Technical Field

The invention relates to a tire pressure monitoring system (TPMS) for four-wheel passenger vehicle, particularly, relates to a method and device of TPMS for receiving and processing the tire pressure signals in order to realize tire positioning.

### Background Art

Tire pressure monitoring system (TPMS) is used mainly for monitoring the pressure and temperature of tires of a vehicle, for warning in advance the potential danger caused by the pressure and temperature of the tires to ensure traffic safety. With the development of the TPMS technology, the requirement for the TPMS is becoming higher and higher . It is required that not only the pressure and temperature information of the tires can be displayed but also the positions of the tires can be indicated accurately. Therefore, higher requirements are put forward for the tire positioning technology.

Currently, there are the following schemes in the tire positioning area:
(1) Fixed code form: in said positioning technology, the entire identification (ID) code information of the transmitter is stored in the receiving and displaying module in read-only form when the product is outputted from the factory, and it cannot be modified when it is used. The scheme is rather simple, however, the inadequacy is: the transmitter should not be installed at wrong position, otherwise the identification may be confused while using; at the same time, after the transmitting module being damaged, the user can only solve the problems by sending the product to the manufacturer.
(2) Interface inputting form: in said positioning technology, the ID information of each transmitting module is printed on the outer package or on the product, after installing, changing the tire position or the transmitting module being damaged, the ID information can be inputted into the receiving and displaying module by the keys to perform correct identification.
   The inadequacy of said technology is: because the length of ID is 16 bits or 32 bits, the input procedure is rather complicated, wrong code group may be inputted by the user; and it is unexpected that installing so many keys on a vehicle having many instruments, it makes the layout inconvenience.
(3) Low frequency wakeup form: in said positioning technology, the near-field effect of the low frequency (LF) signal (such as a signal of 125 KHz) is used, and a LF antenna device is installed near each tire, the transmitting detection module of the corresponding tire can be triggered individually by controlling the LF antenna device, then the identification code can be transmitted by the triggered transmitting detection module as a radio frequency (RF) signal, and the identification code of the corresponding tire TPMS module can be obtained by the receiving module via the RF signal, thereby the position of the tire can be determined automatically.

The inadequacy of said technology is:
1. If a LF antenna is used, then the workload of installing the LF antenna and wiring is large, and the cost is high;
2. Specific devices are used, and each tire may be operated manually, thereby the operation is troublesome;
3. Various interferences exist because the electromagnetic environment on the vehicle is complicated, and the low frequency signal may be interfered, it causes the positioning failure.

US 2009/0224902 relates to a tire monitoring device and tire problem detecting device and does not disclose at least a first directional antenna positioned near one of the front whels of a vehicle, its orientation pointing to another front wheel of said vehicle, a second directional antenna positioned near one of the rear wheels of said vehicle, said one of the rear wheel and said one of the front wheel being arranged diagonally and the orientation of the second directional antenna pointing to another rear wheel of the vehicle and a micro-controller for receiving the converted electric field strength signals of the respective transmitters, and determining the tire positions where the respective transmitters are installed based on the magnitudes of the electric field strength signals of the respective transmitters.

EP 1440 824 relates to a tire pressure monitoring apparatus and process.

JP 2005 263021 relates to a tire condition monitoring device.

### Summary of the Invention

One object of the invention is to provide a low cost tire positioning device which can position the tires conveniently.

Another object of the invention is to provide a method and device for receiving and processing the tire pressure signals by using said tire positioning device.

The tire positioning device provided in the invention comprises a first directional antenna, a second directional antenna, an amplifier and a field strength determination module. The first directional antenna can be positioned near one of the front wheels of a vehicle, and its orientation points to another front wheel of
said vehicle. The second directional antenna can be positioned near one of the rear wheels of said vehicle, said rear wheel and said one of the front wheels are arranged diagonally, and the orientation of the second directional antenna points to another rear wheel of said vehicle. The amplifier can be connected to the first directional antenna and the second directional antenna to amplify the transmitter signals detected by the first directional antenna and the second directional antenna, respectively. The field strength determination module can be connected to the amplifier for comparing the electric field strength of the transmitter signals received by the first directional antenna and the second directional antenna to determine the tire positions where the transmitters are installed.

In said tire positioning device, said amplifier and said field strength determination module are combined in the receiving and displaying module of the TPMS of said vehicle.

In said tire positioning device, the distance between said first directional antenna and said one of the front wheels of said vehicle is less than 1 meter.

In said tire positioning device, the distance between said second directional antenna and said one of the rear wheels of said vehicle is less than 1 meter.

In said tire positioning device, the signals transmitted by said transmitters are radio-frequency signals.

A tire pressure signal receiving and processing device provided in the invention comprises a first directional antenna, a second directional antenna, an amplifier, a signal converter and a micro-controller. The first directional antenna can be positioned near one of the front wheels of a vehicle, and its orientation points to another front wheel of said vehicle. The second directional antenna can be positioned near one of the rear wheels of said vehicle, said one of the rear wheels and said one of the front wheels are arranged diagonally, and the orientation of the second directional antenna points to said another rear wheel of said vehicle. The amplifier can be connected to the first directional antenna and the second directional antenna to amplify the pressure signals in radio form transmitted from the transmitters and detected by the first directional antenna and the second directional antenna, respectively. The pressure signals in the radio form can be converted to electric field strength signals by the signal converter. The converted electric field strength signals of the respective transmitters can be received by the micro-controller, and the tier positions where the transmitters are positioned can be determined based on the magnitude of the electric field strength signals of the respective transmitters.

In said tire positioning device, said amplifier and said signal converter can be disposed internally in a demodulator, said pressure signals can also be demodulated by said demodulator and sent to said micro-controller for processing.

A tire pressure signal receiving and processing method proposed in the invention comprises the following steps: disposing a first directional antenna near one of the front wheels of a vehicle with its orientation pointing to another front wheel of said vehicle; disposing a second directional antenna near one of the rear wheels of said vehicle, said one of the rear wheels and said one of the front wheels being disposed diagonally, and its orientation pointing to said another rear wheel of said vehicle; amplifying the pressure signals in radio form transmitted from the transmitters and detected by the first directional antenna and the second directional antenna, respectively; converting the pressure signals in the radio form to electric field strength signals, and receiving the converted electric field strength signals of the respective transmitters, and determining the tire positions where the respective transmitters are disposed based on the magnitudes of the electric field strength signals of the respective transmitters.

Because the above technical scheme is used in the invention, the electric field strength can be detected by using the diagonal antennas, the electric field strength data can be processed by specific algorithm, and the tire positions can be determined. Therefore, by comparing with the prior art, the following notable advantages are achieved by the invention:
(1) The installation, and maintenance are easy and quick. Particularly, the transmitters need not be distinguished during installation, they can be installed randomly, and so as the maintenance;
(2) Said technical scheme detects the magnitudes of the field strength, no any hardware must be added and no any increased cost;
(3) It is versatile, and it can be used for various four-wheel vehicles;
(4) The operation is simple.

### Description of figures

The features and performances of the invention can be further described by the following embodiments and the drawings.
Fig. 1 shows a layout diagram of the tire positioning device according to an embodiment of the invention.
Fig. 2 shows an electrical principle diagram of the tire positioning device according to an embodiment of the invention.
Fig. 3 shows an internal structure diagram of the receiving and displaying module according to an embodiment of the invention.
Fig. 4 shows a tire positioning flow chart according to an embodiment of the invention.

### Embodiments of the invention

In order to enable the TPMS to position the tires easily and quickly, a tire positioning device of the invention is described in the following embodiment. The tire positioning device measures electric field strength to distinguish different transmitters and tires thereof.

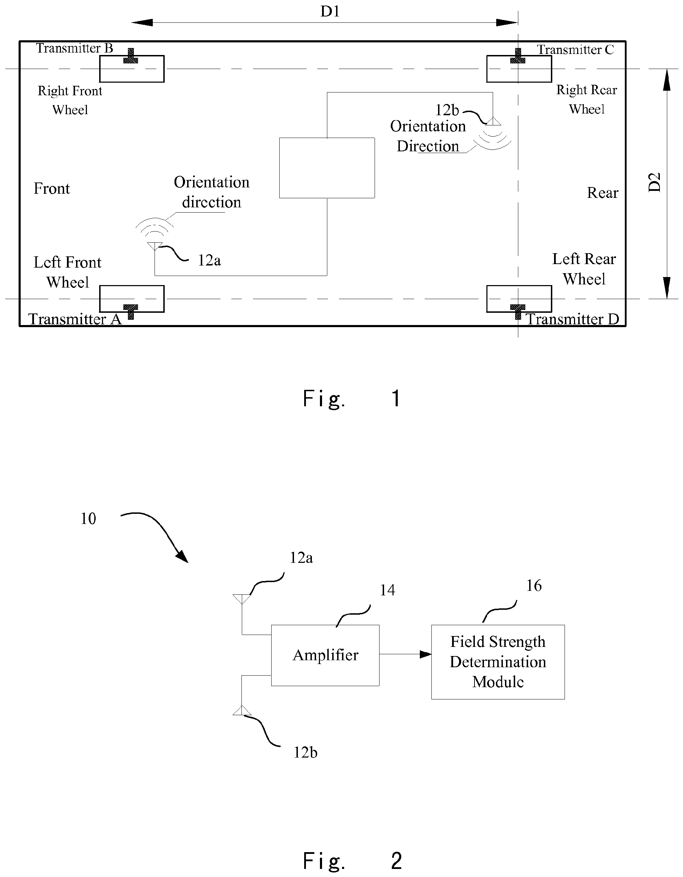

Fig. 1 shows a layout diagram of the tire positioning device according to an embodiment of the invention. Referring to Fig. 1, on a four-wheel vehicle, there are four transmitters A, B, C, and D in total, with each tire having one transmitter disposed thereon. The distance D1 between the front wheels and the rear wheels of the vehicle is about 2.7 Meters, the distance D2 between the left wheels and the right wheels is about 1.6 Meters. In an embodiment, the respective transmitters use radio frequency (RF) signals. In this embodiment, the tire positioning device 10 comprises 2 directional antennas 12a, 12b, an amplifier 14, and a field strength determination module 16.

The main function of the directional antennas 12a, 12b is to measure inductively the electric field strength of the signals transmitted by the respective transmitters A, B, C, and D. Furthermore, the sensor sensitivity of the directional antennas 12a, 12b at a specific direction is larger than that at other directions.

In order to distinguish the electric field strength of four transmitters, two directional antennas 12a, 12b can be disposed diagonally. Specifically, the directional antenna 12a can be installed at a position within a range of about 1 M from the transmitter A of the left front wheel, and the orientation points to the transmitter B of the right front wheel at the opposite side. The directional antenna 12b can be installed at a position within a range of 1M from transmitter C of the right rear wheel, and the orientation points to the transmitter D of the left rear wheel at the opposite side. However, the directional antennas 12a, 12b are omni-directional in the near-field range, therefore the electric field strength of the transmitters A, D measured by them, respectively, is still large.

The two directional antennas 12a, 12b are connected to the amplifier 14. The main function of the amplifier 14 is to amplify the signals detected by the directional antennas according to a fixed magnification , and it is of benefit to the subsequent data processing. The main function of the field strength determination module 16 is to compare the electric field strength of the transmitter signals received by the directional antennas 12a, 12b and to determine the tire positions where the transmitters are disposed. In this embodiment, the modulation of the transmitter signals is not involved, instead, only the measure of the signal strength is carried out.

For example, it is set that:
The electric field strength of the transmitters A, B, C, and D measured by the directional antenna 12a is E1A, E1B, E1C, and E1D, respectively;

The electric field strength of the transmitters A, B, C, and D measured by the directional antenna 12b is E2A, E2B, E2C, and E2D, respectively.

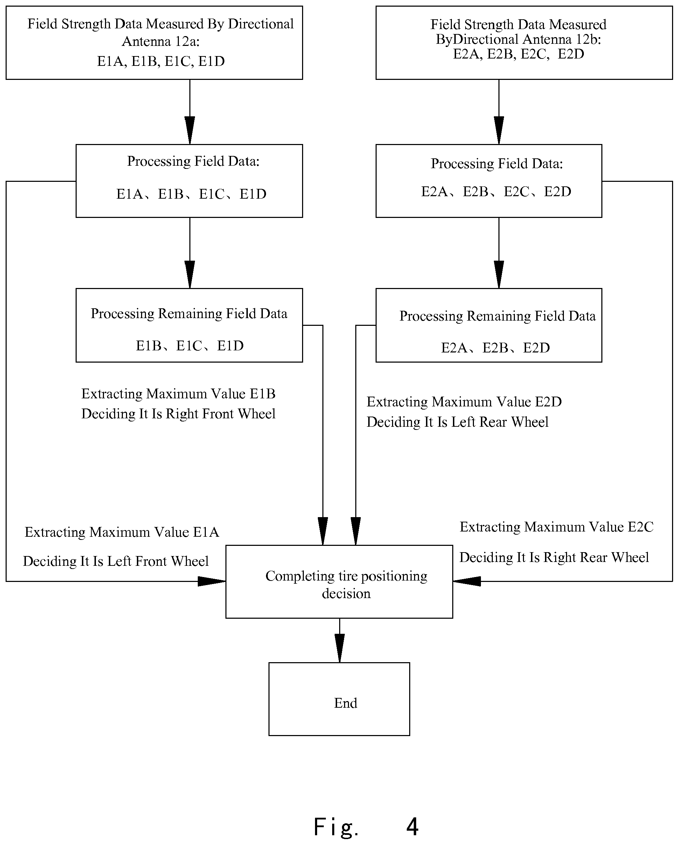

Fig. 4 shows a tire position flow chart according to an embodiment of the invention. Referring to Fig. 4, after signals being transmitted from the respective transmitters A, B, C, and D, the data E1A, E1B, E1C, and E1D can be detected by the tire positioning device 10 in real time. It can be known from the layout of the vehicle that the distance between the front wheel and the rear wheel is larger than the distance between the left wheel and the right wheel. Based on the theory of the electromagnetic field distribution, the electric field strength attenuates as the distance increased. It can be further obtained by incorporating the directional antenna theory that among the field strength of E1A, E1B, E1C, and E1D, E1A is the maximum. Here, although the direction of the directional antenna points to the transmitter B of the right front wheel, the field strength E1A is larger than the field strength E1B because of the fact that the directional antenna is omni-directional in the near-field range. While among E1B, E1C, E1D, E1B is the maximum. It can thus be decided that the largest electric field strength detected by the directional antenna 12a is from the transmitter A of the left front wheel, while the electric field strength from the transmitter B of the right front wheel, is the second largest.

For the same reason, it can be decided from the directional antenna 12bthat the electric field strength E2C detected by the directional antenna 12a is the largest, it is from the transmitter C of the right rear wheel, the field strength E2D from the transmitter D of the left rear wheel, is the second largest.

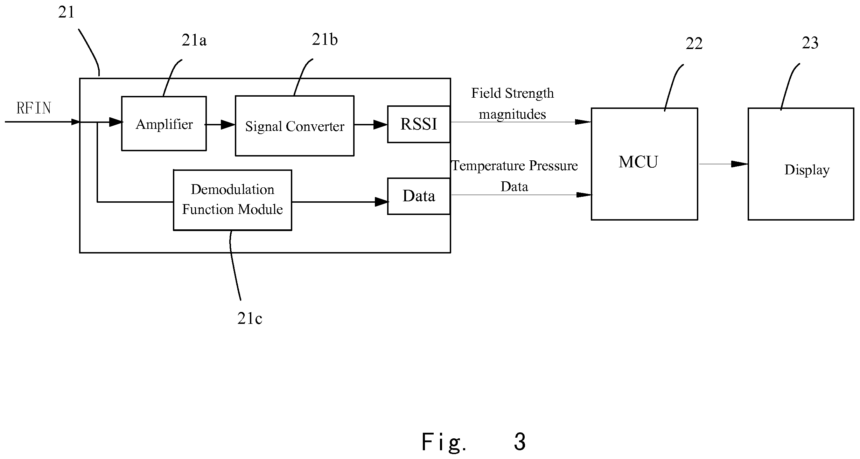

In practical application, said amplifier 14 and field strength determination module 16 can be incorporated into the receiving and displaying module of the TPMS to form a receiving and processing device for the tire pressure signals. As shown in Fig. 3, the receiving and displaying module 20 comprises a demodulator 21, a micro-controller unit (MCU) 22 and a display 23.

The demodulator 21 can comprise an amplifier 21a for measuring the field strength and a signal converter 21b. The amplifier 14 connects with two directional antennas 12a, 12b, the main function of the amplifier 21a is to amplify the signals, such as the pressure signals in the radio form (for example, RF signals), detected by the directional antennas according to a fixed magnification, and it is of benefit to the subsequent data processing. The main function of the signal converter 21b is to perform the data quantization of the signals measured by the directional antennas in order to produce the electric field strength signals having distinguishable field strength magnitudes. The magnitudes of the electric field strength signals can be compared by the MCU 22 thereby the transmitter positions corresponding to the respective electric field strength can be determined. The function of the field strength determination module can be implemented collectively with the signal converter 21b and MCU 22.

The RF signals received by the directional antennas 12a, 12b are transmitted to the receiving and displaying module 20, the electric field strength values are transmitted to the MCU 22 by the demodulator 21 of the receiving and displaying module 20 via RSSI port, then the data can be processed by the MCU 22 based on specific algorithm for positioning the tires. On the other hand, RF signals are amplified, frequency selected, detected, demodulated by the demodulation function module 21c of the demodulator 21 to extract the pressure, temperature, and state information of the sensors, and those are processed by the MCU 22, and finally, displayed on the display 23.

In summary, In the embodiment of the invention, the electric field strength can be measured by utilizing diagonal directional antennas, and the field strength data are processed by using specific algorithm thereby the position of the tires can be decided. The advantages of the scheme are as follows:
(1) The installation, and maintenance are easy and quick. Particularly, the transmitters need not be distinguished during installation during installation, they can be installed randomly, and so as the maintenance;
(2) Said technical scheme detects the magnitude of the field strength, no any hardware must be added and no any increased cost;
(3) It is versatile, and it can be used for various kinds of four-wheel vehicles;
(4) The operation is simple.

Although the invention has been disclosed by the preferred embodiment as above, but it is not a limitation to the invention, and various modifications and improvements can be made by those skilled in the art without departing scope of the invention, therefore, the protection scope of the invention should be within the scope as defined in the claims.

## Claims

1. A tire pressure signal receiving and processing device used for positioning the tires of a vehicle having four wheels, wherein each tire has one transmitter (A, B, C, D) disposed thereon, said device comprises:
a first directional antenna (12b) positioned near one of the front wheels of said vehicle, and its orientation pointing to another front wheel of said vehicle;
a second directional antenna (12a) positioned near one of the rear wheels of said vehicle, said one of the rear wheels and said one of the front wheels being arranged diagonally, and the orientation of the second directional antenna pointing to another rear wheel of said vehicle;
an amplifier (21a) connected to the first directional antenna and the second directional antenna to amplify the pressure signals in radio form transmitted by the transmitters and detected by the first directional antenna and the second directional antenna, respectively;
a signal converter (21b) for converting the pressure signals in radio signal form into electric field strength signals;
a micro-controller (22) for receiving the converted electric field strength signals of the respective transmitters, and determining the tire positions where the respective transmitters are installed based on the magnitudes of the electric field strength signals of the respective transmitters.

2. The tire pressure signal receiving and processing device of claim 1, wherein said amplifier and said signal converter are disposed internally in a demodulator (21), said demodulator further demodulates said pressure signals and sends said pressure signals to said micro-controller for processing.

3. A tire pressure signal receiving and processing method for positioning the tires of a vehicle having four wheels, wherein each tire has one transmitter disposed thereon, said method comprises:
disposing a first directional antenna near one of the front wheels of said vehicle with its orientation pointing to another front wheel of said vehicle;
disposing a second directional antenna near one of the rear wheels of said vehicle, said one of the rear wheels and said one of the front wheels being disposed diagonally, and the orientation of the second directional antenna pointing to another rear wheel of said vehicle;
amplifying the pressure signals in the radio form transmitted from the transmitters and detected by the first directional antenna and the second directional antenna, respectively;
converting the pressure signals in the radio form into electric field strength signals, and
receiving the converted electric field strength signals of the respective transmitters, and determining the tire positions where the respective transmitters are disposed based on the magnitudes of the electric field strength signals of the respective transmitters.

4. A tire positioning device (10) used for a vehicle having four wheels, wherein each tire has one transmitter arranged thereon, said device comprises:
a first directional antenna positioned near one of the front wheels of said vehicle, and its orientation pointing to another front wheel of said vehicle;
a second directional antenna positioned near one of the rear wheels of said vehicle, said one of the rear wheels and said one of the front wheels being arranged diagonally, and the orientation of the second directional antenna pointing to another rear wheel of said vehicle;
an amplifier (14) connected to the first directional antenna and the second directional antenna to amplify the transmitter signals detected by the first directional antenna and the second directional antenna, respectively; and
a field strength determination module (16) connected to said amplifier for comparing the electric field strength of the transmitter signals received by the first directional antenna and second directional antenna to determine the tire positions where the transmitters are installed.

5. The tire positioning device of claim 4, wherein said amplifier and said field strength determination module are combined in a receiving and displaying module of the TPMS of said vehicle.

6. The tire positioning device of claim 4, wherein the distance between said first directional antenna and said one of the front wheels of said vehicle is less than 1 meter.

7. The tire positioning device of claim 4, wherein the distance between said second directional antenna and said one of the rear wheels of said vehicle is less than 1 meter.

8. The tire positioning device of claim 4, wherein the signals transmitted by said transmitters are radio frequency signals.

## Patentansprüche

1. Reifendrucksignalempfangs- und -verarbeitungsgerät, das zum Bestimmen der Positionen der Reifen eines vier Räder aufweisenden Fahrzeugs verwendet wird, wobei jeder Reifen einen darauf eingerichteten Sender (A, B, C, D) aufweist, wobei das Gerät Folgendes umfasst:
eine erste Richtantenne (12b), die in der Nähe eines der Vorderräder des Fahrzeugs positioniert ist, wobei ihre Ausrichtung zu einem anderen Vorderrad des Fahrzeugs weist;
eine zweite Richtantenne (12a), die in der Nähe eines der Hinterräder des Fahrzeugs positioniert ist, wobei das eine der Hinterräder und das eine der Vorderräder diagonal angeordnet sind und die Ausrichtung der zweiten Richtantenne zu einem anderen Hinterrad des Fahrzeugs weist;
einen Verstärker (21a), der mit der ersten Richtantenne und der zweiten Richtantenne verbunden ist, um die Drucksignale in Funkform, die durch die Sender übertragen und durch die erste Richtantenne bzw. die zweite Richtantenne detektiert werden, zu verstärken;
einen Signalumwandler (21b) zum Umwandeln der Drucksignale in Funksignalform in Signale mit elektrischer Feldstärke;
einen Mikrocontroller (22) zum Empfangen der umgewandelten Signale mit elektrischer Feldstärke der jeweiligen Sender und Ermitteln der Reifenpositionen, an denen die jeweiligen Sender installiert sind, basierend auf den Pegeln der Signale mit elektrischer Feldstärke der jeweiligen Sender.

2. Reifendrucksignalempfangs- und -verarbeitungsgerät nach Anspruch 1, wobei der Verstärker und der Signalumwandler im Inneren eines Demodulators (21) eingerichtet sind, wobei der Demodulator ferner die Drucksignale demoduliert und die Drucksignale zur Verarbeitung an den Mikrocontroller sendet.

3. Reifendrucksignalempfangs- und -verarbeitungsverfahren zum Bestimmen der Positionen der Reifen eines vier Räder aufweisenden Fahrzeugs, wobei jeder Reifen einen darauf eingerichteten Sender aufweist, wobei das Verfahren Folgendes umfasst:
Einrichten einer ersten Richtantenne in der Nähe eines der Vorderräder des Fahrzeugs, wobei ihre Ausrichtung zu einem anderen Vorderrad des Fahrzeugs weist;
Einrichten einer zweiten Richtantenne in der Nähe eines der Hinterräder des Fahrzeugs, wobei das eine der Hinterräder und das eine der Vorderräder diagonal eingerichtet sind und die Ausrichtung der zweiten Richtantenne zu einem anderen Hinterrad des Fahrzeugs weist;
Verstärken der Drucksignale in der Funkform, die von den Sendern übertragen und durch die erste Richtantenne bzw. die zweite Richtantenne detektiert werden;
Umwandeln der Drucksignale in der Funkform in Signale mit elektrischer Feldstärke und
Empfangen der umgewandelten Signale mit elektrischer Feldstärke der jeweiligen Sender und Ermitteln der Reifenpositionen, an denen die jeweiligen Sender eingerichtet sind, basierend auf den Pegeln der Signale mit elektrischer Feldstärke der jeweiligen Sender.

4. Reifenpositionsbestimmungsgerät (10), das für ein vier Räder aufweisendes Fahrzeug verwendet wird, wobei jeder Reifen einen darauf angeordneten Sender aufweist, wobei das Gerät Folgendes umfasst:
eine erste Richtantenne, die in der Nähe eines der Vorderräder des Fahrzeugs positioniert ist, wobei ihre Ausrichtung zu einem anderen Vorderrad des Fahrzeugs weist;
eine zweite Richtantenne, die in der Nähe eines der Hinterräder des Fahrzeugs positioniert ist, wobei das eine der Hinterräder und das eine der Vorderräder diagonal angeordnet sind und die Ausrichtung der zweiten Richtantenne zu einem anderen Hinterrad des Fahrzeugs weist;
einen Verstärker (14), der mit der ersten Richtantenne und der zweiten Richtantenne verbunden ist, um die Sendersignale, die durch die erste Richtantenne bzw. die zweite Richtantenne detektiert werden, zu verstärken; und
ein Feldstärkeermittlungsmodul (16), das mit dem Verstärker zum Vergleichen der elektrischen Feldstärke der Sendersignale, die durch die erste Richtantenne und die zweite Richtantenne empfangen werden, verbunden ist, um die Reifenpositionen, an denen die Sender installiert sind, zu ermitteln.

5. Reifenpositionsbestimmungsgerät nach Anspruch 4, wobei der Verstärker und das Feldstärkeermittlungsmodul in einem Empfangs- und Anzeigemodul des RDKS des Fahrzeugs kombiniert sind.

6. Reifenpositionsbestimmungsgerät nach Anspruch 4, wobei der Abstand zwischen der ersten Richtantenne und dem einen der Vorderräder des Fahrzeugs weniger als 1 Meter beträgt.

7. Reifenpositionsbestimmungsgerät nach Anspruch 4, wobei der Abstand zwischen der zweiten Richtantenne und dem einen der Hinterräder des Fahrzeugs weniger als 1 Meter beträgt.

8. Reifenpositionsbestimmungsgerät nach Anspruch 4, wobei die Signale, die durch die Sender übertragen werden, Hochfrequenzsignale sind.

## Revendications

1. Dispositif de réception et de traitement de signaux de pression de pneu utilisé pour identifier les positions des pneus d'un véhicule à quatre roues, chaque pneu comportant un émetteur (A, B, C, D), ledit dispositif comprenant :
une première antenne directive (12b) positionnée à proximité d'une des roues avant dudit véhicule et dont l'orientation pointe vers une autre roue avant dudit véhicule ;
une deuxième antenne directive (12a) positionnée à proximité d'une des roues arrière dudit véhicule, ladite une des roues arrière et ladite une des roues avant étant disposées en diagonale et l'orientation de la deuxième antenne directive pointant vers une autre roue arrière dudit véhicule ;
un amplificateur (21a) relié à la première antenne directive et à la deuxième antenne directive afin d'amplifier les signaux de pression sous forme radio émis par les émetteurs et détectés par la première antenne directive et la deuxième antenne directive, respectivement ;
un convertisseur de signaux (21b) destiné à convertir les signaux de pression sous forme de signaux radio en signaux d'intensité de champ électrique ;
un microcontrôleur (22) destiné à recevoir les signaux d'intensité de champ électrique convertis des émetteurs respectifs, et à déterminer les positions des pneus où les émetteurs respectifs sont installés en fonction des amplitudes des signaux d'intensité de champ électrique des émetteurs respectifs.

2. Dispositif de réception et de traitement de signaux de pression de pneu selon la revendication 1, dans lequel ledit amplificateur et ledit convertisseur de signaux sont placés à l'intérieur d'un démodulateur (21), ledit démodulateur en outre démodulant lesdits signaux de pression et envoyant lesdits signaux de pression audit microcontrôleur en vue de leur traitement.

3. Procédé de réception et de traitement de signaux de pression de pneu pour identifier les positions des pneus d'un véhicule à quatre roues, chaque pneu comportant un émetteur, ledit procédé comprenant les étapes consistant à :
placer une première antenne directive à proximité d'une des roues avant dudit véhicule, dont l'orientation pointe vers une autre roue avant dudit véhicule ;
placer une deuxième antenne directive à proximité d'une des roues arrière dudit véhicule, ladite une des roues arrière et ladite une des roues avant étant placées en diagonale, l'orientation de la deuxième antenne directive pointant vers une autre roue arrière dudit véhicule ;
amplifier les signaux de pression sous forme radio émis par les émetteurs et détectés par la première antenne directive et la deuxième antenne directive, respectivement ;
convertir les signaux de pression sous forme de signaux radio en signaux d'intensité de champ électrique, et
recevoir les signaux d'intensité de champ électrique convertis des émetteurs respectifs, et déterminer les positions des pneus où les émetteurs respectifs sont placés en fonction des amplitudes des signaux d'intensité de champ électrique des émetteurs respectifs.

4. Dispositif (10) d'identification des positions de pneus utilisé pour un véhicule à quatre roues, chaque pneu comportant un émetteur, ledit dispositif comprenant :
une première antenne directive positionnée à proximité d'une des roues avant dudit véhicule et dont l'orientation pointe vers une autre roue avant dudit véhicule ;
une deuxième antenne directive positionnée à proximité d'une des roues arrière dudit véhicule, ladite une des roues arrière et ladite une des roues avant étant disposées en diagonale, et l'orientation de la deuxième antenne directive pointant vers une autre roue arrière dudit véhicule ;
un amplificateur (14) relié à la première antenne directive et à la deuxième antenne directive afin d'amplifier les signaux des émetteurs détectés par la première antenne directive et la deuxième antenne directive, respectivement ; et
un module de détermination d'intensité de champ (16), relié audit amplificateur, destiné à comparer l'intensité de champ électrique des signaux des émetteurs reçus par la première antenne directive et la deuxième antenne directive dans le but de déterminer les positions des pneus où les émetteurs sont installés.

5. Dispositif d'identification des positions de pneus selon la revendication 4, dans lequel ledit amplificateur et ledit module de détermination d'intensité de champ sont combinés dans un module de réception et d'affichage du TPMS dudit véhicule.

6. Dispositif d'identification des positions de pneus selon la revendication 4, dans lequel la distance entre ladite première antenne directive et ladite une des roues avant dudit véhicule est inférieure à 1 mètre.

7. Dispositif d'identification des positions de pneus selon la revendication 4, dans lequel la distance entre ladite deuxième antenne directive et ladite une des roues arrière dudit véhicule est inférieure à 1 mètre.

8. Dispositif d'identification des positions de pneus selon la revendication 4, dans lequel les signaux émis par lesdits émetteurs sont des signaux radiofréquence.
